(19) Europäisches Patentamt / European Patent Office / Office européen des brevets

(11) **EP 1 609 815 B1**

(12) **EUROPEAN PATENT SPECIFICATION**

(45) Date of publication and mention
of the grant of the patent:
**03.09.2008 Bulletin 2008/36**

(51) Int Cl.:
*C08J 7/12* *(2006.01)*

(21) Application number: **05253756.0**

(22) Date of filing: **16.06.2005**

(54) **Process for reducing the permeability of plastics materials**

Verfahren zur Reduktion der Permeabilität von Plastikmaterialien

Procédé de réduction de la perméabilite de matières plastiques

(84) Designated Contracting States:
**AT BE BG CH CY CZ DE DK EE ES FI FR GB GR HU IE IS IT LI LT LU MC NL PL PT RO SE SI SK TR**

(30) Priority: **21.06.2004 EP 04253705**

(43) Date of publication of application:
**28.12.2005 Bulletin 2005/52**

(73) Proprietor: **AIR PRODUCTS AND CHEMICALS, INC.**
**Allentown, PA 18195-1501 (US)**

(72) Inventors:
• **Taege, Reiner Reinhard Wilhelm**
**Heiligenhaus (DE)**
• **Ferrier, Gordon George**
**Reading, Berkshire RG4 6RE (GB)**
• **Kharitonov, Alexandr Pavlovich**
**Noginskli District, Moscow Region (RU)**

(74) Representative: **Burford, Anthony Frederick**
**Beck Greener**
**Fulwood House**
**12 Fulwood Place**
**London WC1V 6HR (GB)**

(56) References cited:
**EP-A- 0 416 400      EP-A- 0 816 418**
**DE-A- 1 905 094      US-A- 4 595 706**
**US-A- 4 668 743      US-A- 4 678 842**
**US-A- 4 869 859      US-A- 6 045 766**

**Description**

The present invention relates to a process for reducing the permeability of plastics materials, particularly for reducing the permeability of polymer membranes to organic solvents such as vehicle fuel. The invention has particular application in the treatment of polymer membranes in the form of plastics containers.

In recent years, industrialised nations have taken steps to lower emissions originating from automotive sources in order to improve air quality, in particular in urban areas. As a result, typical hydrocarbon based vehicle fuels have been supplemented with oxygenated components such as ethers and alcohols, e.g. methanol. The combination of the introduction of these new "clean" fuels (containing hydrophobic and hydrophilic components) on to the market and the high legislative standards for the emission of volatile organic compounds ("VOCs") represents a significant challenge to the established barrier fluorination techniques extensively used in the automotive industry. The new fuels and emission standards require techniques for the production of fluorinated surface barrier layers which allow only very low permeation of such fuels.

The permeation of liquids through polymer membranes is often described as a staged process involving wetting of the upstream substrate surface, "dissolution" of the liquid into the polymer, diffusion of the solute through the polymer and desorption of the solute on the downstream side of the membrane. Therefore, decreasing the wettability of a polymer membrane surface usually decreases the permeability of the membrane to liquids. One method of decreasing the wettability of a polymer membrane is by surface fluorination.

Fluorine has been used to reduce the reactivity of rubber to reactive chemicals. For example, US-A-2129289 (Söll; published 1938) discloses a process for fluorinating rubber, synthetic rubber-like masses and substitutes for rubber such that they are resistant to the action of fluorine. The rubber is treated with fluorine diluted by a factor of 1:1 to 1:10 in an indifferent gas such as air, nitrogen or carbon dioxide. The surface of the fluorinated rubber contains between about 1 to about 10% fluorine which renders the rubber resistant to the action of fluorine.

On an industrial scale, surface fluorination is usually carried out either "in-line" or "off-line".

With the "in-line" process, fluorination is an intrinsic part of a higher-level production process. The treatment is usually a high-pressure, high temperature process that is carried out while the plastic article is being formed within the mould. Therefore, the time available for fluorine treatment is usually short and ranges from about 1 to no more than about a few minutes.

In the "off-line" process, fluorination is usually applied to the finished plastics article and may be carried out temporally and spatially distant from the actual production of the plastic article. "Off-line" fluorine treatment processes are typically low-pressure processes performed at slightly elevated temperatures. Treatment time can take up to about two hours.

In the surface fluorination process, the polymeric substrate is usually exposed at ambient or elevated temperatures to fluorine or a fluorine-containing gas mixture. During this treatment, hydrogen bonded within the polymer is progressively replaced by fluorine. Gaseous hydrogen fluoride is a volatile by-product of this replacement process.

The fluorination of a polyolefin results in the formation of a fluorinated surface layer with selective repellent properties resulting, in itself, in significantly reduced rates of gas, vapour and solvent permeation. For example, US-A-2811468 (Joffre *et al*; published 1957) discloses treating polyethylene bottles with a stream of fluorine gas at room temperature. Test results showed that the treated bottles were less permeable to test liquids such as allyl caproate, perfume and aftershave than untreated bottles.

It is known that the presence of oxygen during fluorination can adversely affect the barrier performance of plastics articles. Various processes have been developed to address this problem but these processes usually seek to solve this problem by carefully controlling of the level of oxygen as a contaminant during fluorination. For example, US-A-4491653 (McGinniss *et al*; published 1985) discloses a process for fluorinating the surface of a solid polymer using fluorine in oxygen-free nitrogen. US-A-5401451 (Meixner *et al*; published 1995) discloses a multi-step fluorination process for blow moulding thermoplastic containers in an essentially oxygen-free environment.

The permeation barrier properties of surface fluorination can be enhanced by the addition of components to the fluorination fluid medium. For example, US-A-3862284 (Dixon *et al*; published 1975) discloses a process for blow moulding thermoplastic articles using a blowing gas containing about 0.1 to about 20% by volume fluorine in an inert gas such as nitrogen, argon or helium. It is disclosed that the addition of about 0.5 to about 20% by volume of sulphur dioxide to the fluorine-containing blowing gas improves the solvent barrier properties of the resultant blow moulded container and that the addition of about 0.5 to about 20% by volume of carbon monoxide, about 0.5 to about 50% by volume of carbon dioxide or mixtures of both improves the oil barrier properties of the container. It is also disclosed that the addition of about 0.05 to about 25% by volume of oxygen increases not only the dyeability but also the oil barrier properties of the container.

It is also known to improve the barrier properties of thermoplastic substrates by fluorinating the surface of the substrate and then either coating the fluorinated surface with a barrier coating such as polyvinylidene chlorides, ethylene vinyl alcohols, epoxies, polyurethanes, acrylics, polyvinyl chloride, ureaformaldehyde, silicones and fluorocarbons [see US-A-4764405 (Bauman *et al*; published 1988)] or hydroxylating the fluorinated surface using hydroxide solutions of sodium, calcium or ammonium and then refluorinating the surface [see US-A-3758450 (Margrave *et al*; published 1973)].

Researchers have stressed in particular the importance of surface wetting for the permeation of liquids and vapours through fluorinated barrier layers. Hayes (J. Fluorine Chem. 8(1), 69 (1976)) studied the permeation of a broad range of pure solvents through polyethylene treated either with virtually oxygen-free or oxygen containing fluorine/inert gas blends. It was found that surfaces treated with virtually oxygen-free fluorine blends are almost always not wetted by hydrophobic media. Surface fluorination in the presence of oxygen provided surfaces with some repellence towards hydrophobic solvents. These surfaces were however, readily wetted by hydrogen bonding solvents. Under the conditions chosen, surfaces treated without the addition of oxygen were more easily wetted by strongly hydrogen bonding solvents like water.

Du Toit et al (J. Fluorine Chemistry 74, 43 (1995)) treated polyethylene samples with both technically oxygen-free and oxygen-containing fluorine/nitrogen blends in a dynamic flow system. The results indicated that polyethylene surfaces were more easily wetted by hydrogen bonding solvents if the surfaces were submitted to a very short treatment with standard fluorine/inert gas blends.

Hobbs et al (J. Fluorine Chemistry 104, 87 (2000)) studied the permeation of toluene-methanol mixtures through the walls of polyethylene container surfaces treated with technical fluorine/nitrogen blends and those with an oxygen admixture. In particular with containers submitted to the latter treatment, the authors observed "assisted permeation". The presence of hydrophilic methanol increased notably the permeation of toluene thorough the oxyfluorinated container walls.

Studies on the oxidative degradation of polyolefins have demonstrated that polymer degradation results in distinct fragmentation and functionalisation of the polymer, including the formation of oxygen-containing functional groups such as hydroxyl, carbonyl and carboxyl groups (Gugumus, Polym. Deg. Stab. 66,161 (1999)). Hydroxyl, carbonyl and carboxyl groups are efficient hydrogen-bond acceptors and thus these groups are likely to increase the hydrophilic wettability of the polymer. Further surface fluorination studies indicate that the presence of oxygen during the fluorination process can enable formation of oxygen-containing functional groups, which causes the polymer to be more easily wetted by hydrophilic solvents (Adcock et al; J. Am. Chem. Soc 100,1948 (1978), Lagow et al; Progr. Inorg. Chem 26, 161 (1979); see also US-A-4020223 and US-A-4764405).

Bohland et al (Trans. Faraday Soc.42, 244 (1946)) studied the oxidation of olefins and rubbers and revealed the prominent role of peroxide radicals as key intermediates in the oxidation process. In addition, other studies have also confirmed the key role of peroxide radicals in the oxidative degradation of polymers.

Stabilizers have been developed to inhibit the oxidative processes that affect the integrity of polymers. These stabilizers (often referred to as "antioxidants"), present as a component of the polymer matrix itself, directly interfere with the key steps of a degradation process either by inhibiting radical chain processes in an early phase of the process or by scavenging peroxide radicals, which are the key drivers of the degradation process.

Such stabilizers are usually complex molecules of high molecular weight, low volatility and low mobility within the polymer matrix. Examples of such existing stabilizers include octadecyl 3,5-di-(tert)-butyl-4-hydroxyhydrocinnamate ($C_{35}H_{62}O_3$, CAS No. 2082-79-3, MW 531, mp 55°C), poly(1-(2-hydroxyethyl)-2,2,6,6-tetramethyl-4-hydroxy-piperindinyl succinate) (CAS No. 65447-770, MW > 2500, mp 55-70°C) and tris-(2,4)-di-(tert-butylphenyl)-phosphit ($C_{42}H_{63}O_3P$, CAS No. 31570-04-4, MW 647, mp 96-97°C).

Such stabilizers are, in particular, intended to thwart oxidative processes that occur during the high temperature steps in polymer processing or while the polymer is processed tribologically. In a similar manner, light-induced oxidation can be efficiently inhibited. However, despite the various possibilities that may start the various oxidation processes, the overall oxidative stress that polymers are exposed to under normal circumstances remains low and can be controlled efficiently by a sufficiently high concentration of these stabilizers.

In contrast, the oxidative stress that a polymer is exposed to during surface fluorination is high in comparison. Fluorination causes the formation of radical species throughout the surface layers of the polymer. Measurements have shown that freshly fluorinated polymer surfaces exhibit persistent, post-treatment reactivity (Kharitonov *et al*; Proceedings, Fluorine In Coatings V, Florida 2003). The residual reactivity is believed to be caused by these non-terminated reactive species remaining from the fluorination process. The reactive species are available for subsequent reaction with oxygen upon exposure of the fluorinated surface to ambient air. The result is again the formation of functional groups which facilitate wetting of the polymer surface by hydrogen bonding solvents, thereby facilitating permeation of solvent through the polymer.

The existing strategy to stabilize polymers by incorporating stabilizers within the polymer matrix is not adequate to mitigate the undesired adverse effects provoked by oxidation reactions accompanying surface fluorination. Overall, surface fluorination is a very extensive reaction, which seizes the polymer as a whole. Not only the base polymer itself, but also all the additional components within a polymer, participate in the fluorination reaction. Stabilizers which protect the polymer against oxidation under normal circumstances take part in the fluorination reaction and become converted into inactive fluorinated derivatives. The incompatibility of the stabilizers with the fluorination reaction facilitates progression of oxidation processes which occur during fluorination and enables freshly fluorinated plastic surfaces to remain very sensitive with regard to oxidative degradation.

A method of forming permeation resistant containers is disclosed in EP-A-0816418 (Hobbs *et al*; published 7th January 1998). The method involves forming the container by blow moulding and fluorinating the container using a reactive fluorine gas containing about 0.5 to 2% fluorine by volume. Conventionally, the residuary fluorine is purged from the container. However, the improvement disclosed in EP-A-0816418 involves quenching residual fluorine using a fluorine scavenging gas such as hydrogen. EP-A-0816418 discloses that the halogen scavenging gas is believed to improve barrier performance by eliminating or competing with oxygen for the reactive sites in the polymer where oxygen might be incorporated.

US-A-6045766 (Moser; published 4th April 2000) discloses a process for reducing the residual hydrogen fluoride present in fluorinated plastic tanks. The plastic tanks are fluorinated and flushed. The residual hydrogen fluoride is removed using a neutralizing agent comprising a component reactive with hydrogen fluoride. In preferred embodiments, the neutralizing agent consists of a low-odour white spirit or a highly refined spirit as a solvent and an acid-neutralizing oil or fuel additive or an organic base such as an amine as the reactive component. It is disclosed that the neutralizing agent may be introduced into the space within the tank in the form of a vapour or fine spray mist of the pure reactive component (e.g. pure oil additive) during the neutralization step. US-A-6045776 exemplifies the use as suitable neutralizing agents of triethylamine in white spirit and the use of either diphenylamine or tributylamine in engine oil.

It is an objective of the present invention to reduce the permeability (thereby improving the barrier performance) of surface fluorinated plastics materials, in particular to organic solvents such as vehicle fuel.

It is another objective of preferred embodiments of the present invention to reduce the wettability of material and subsequent dehydrohalogenation of the fluorinated polymeric material using a strong base such as ethylenediamine to produce a polymeric material with conjugated double bonds provided on the surface thereof.

It is an objective of the present invention to reduce the permeability (thereby improving the barrier performance) of surface fluorinated plastics materials, in particular to organic solvents such as vehicle fuel.

It is another objective of preferred embodiments of the present invention to reduce the wettability of surface fluorinated plastics material to organic solvents, in particular to solvents such as vehicle fuel.

It is a further objection of preferred embodiments to reduce the extent to which fluorinated barrier layer performance deteriorates due to oxidative degradation.

It is also an objective of preferred embodiments of the present invention to reduce the requirements and associated costs for monitoring and controlling the level of oxygen and moisture contaminants in gases and equipment used in surface fluorination processes.

The Inventors have discovered that certain liquid and gaseous compounds comply with the above mentioned objectives and promote a reduction in the undesired detrimental effects caused by the reaction of oxygen or oxygenating compounds, present during surface fluorination of plastics materials, with the fluorinated surface upon exposure of the surface to ambient air.

In accordance with the first aspect of the present invention, there is provided a process for reducing the permeability of a plastics material to organic solvent comprising:

surface-fluorinating at least a portion of the surface of a plastics material to produce a surface-fluorinated plastics material, at least on the surface of which are formed polymer-bonded, carbon centred radicals; oxidizing said carbon-centred radicals to produce polymer-bonded, oxide radicals; and then exposing said surface-fluorinated plastics material to a gaseous fluid comprising at least one antioxidant to produce a plastics material comprising a fluorinated barrier layer.

Without wishing to be bound by any particular theory, the Inventors believe that fluorination of the surface of a plastics material produces polymer-bonded carbon radicals. These radicals react readily with an oxygen source such as air or an alcohol producing oxide radicals, for example, peroxide and alkoxide radicals. The antioxidant scavenges, decomposes or derivatizes polymer-bonded peroxide and alkoxide radicals thereby reducing the level of oxidative degradation of the surface fluorinated polymer material, reducing wettability of the fluorinated surface, particularly to organic solvents and improving the barrier properties of the polymer.

The term "permeability" is intended to include gas permeability, vapour permeability and liquid permeability. The invention has particular application in reducing the permeability of liquids, in particular organic solvents such as vehicle fuel, through plastics membranes.

The antioxidant preferably quench radical species located at least on the surface of said surface-fluorinated plastics material or said surface-fluorinated plastics material derived therefrom thereby reducing or eliminating unwanted reactions of said material.

The antioxidants preferably have high mobility and high volatility. The antioxidants are preferably simple molecules having low molecular weight, e.g. no more than about 180. The antioxidants may have a molecular weight of no more than about 150 or even no more than about 110. The antioxidants preferably have a boiling point at atmospheric pressure (about 0.1 MPa or about 1 atm.) of no more than about 150°C , or even no more than about 100°C and may be gases or liquids at room temperature (e.g. about 20°C) and atmospheric pressure.

Existing stabilizers are bound within the polymer matrix and, thus, have essentially no mobility. Therefore, they are only capable of preventing oxidative reactions that occur within range of the position of the stabilizer bound within the matrix. The antioxidants of the present invention, however, are not bound within the polymer matrix. In contrast, the surface of the polymer material is exposed to a fluid comprising at least one antioxidant. The antioxidants of the present invention are, thus, more mobile than existing stabilizers bound within the polymer matrix. Therefore, the antioxidants preferably have "high mobility" when compared to existing stabilizers.

The antioxidants are radical quenchers that act by scavenging, decomposing or derivatizing polymer bonded peroxide and alkoxide radicals to produce reactive species and stable functional groups or secondary reaction products.

Suitable antioxidants that act in this manner include amines having at least one hydrocarbon group having from 1 to 4, preferably 1 to 2, carbon atoms (e.g. alkylamines, dialkylamines and, preferably, trialkylamines); phosphine and phosphine derivatives. Examples of suitable antioxidants include triethylamine, trimethylamine, dimethylethylamine, diethylmethylamine, methylamine, dimethylamine and phosphine.

Triethylamine is a particularly preferred antioxidant.

Chemically stable mixtures comprising any combinations of these antioxidants may also be used.

The fluid comprising at least one antioxidant may be referred to as a "reactive fluid" in that it reacts with the surface-fluorinated plastics material to reduce or eliminate reaction of the material with an oxygen source. The fluid is a gas.

The fluid may consist essentially of at least one antioxidant, e.g. where the or each antioxidant is not supported in an inert carrier gas. However, the fluid usually comprises at least one antioxidant supported in an inert carrier gas. The antioxidant usually has a (total) partial pressure of no more than about 100 kPa, and preferably no more than 10 kPa. In preferred embodiments, the (total) partial pressure of the antioxidant is about 6 kPa. The inert carrier gas may be for example nitrogen, argon or helium.

The surface-fluorinated plastics material or the surface-fluorinated plastics material derived therefrom is usually exposed to said gaseous fluid at a temperature of from about 0°C to about the softening temperature of the plastics material, e.g. within the self-sustaining temperature range of the plastics material. In preferred embodiment, the exposure temperature is about room temperature, e.g. about 20 to about 25°C.

The surface-fluorinated plastics material or the surface-fluorinated plastics material derived therefrom is usually exposed to the gaseous fluid for less than about 60 minutes. In preferred embodiments, the exposure time is about 40 minutes.

Polymer bonded, carbon centred radicals are formed on at least the surface of the plastics material during surface fluorination. These carbon centred radicals are oxidized prior to exposure to the fluid comprising the antioxidant(s).

Carbon centred radicals may be oxidized prior to exposure to the gaseous fluid by reaction with molecular oxygen present as an impurity during surface fluorination. However, in preferred embodiments, the carbon centred radicals are oxidized prior to exposure to the gaseous fluid by exposing the newly formed surface fluorinated plastics material to a gas comprising molecular oxygen to produce at least partially oxidized surface fluorinated plastics material. The at least partially oxidized surface fluorinated plastics material is then exposed to the gaseous fluid comprising the antioxidant(s).

It is conventional to purge plastics containers after surface fluorination to remove surface fluorination by-products such as hydrogen fluoride. Usually, the purge fluid is an oxygen-free, inert gas such as nitrogen. However, in preferred embodiments of the present invention, gas comprising molecular oxygen is used to purge the surface fluorinated plastics material of surface fluorination by-products. The gas comprising molecular oxygen may be molecular oxygen alone although it is preferably air. The molecular oxygen reacts with the polymer bonded carbon radicals formed during the surface fluorination to produce polymer bonded peroxide and/or alkoxide radicals.

The surface-fluorinated plastics material may be exposed to the gas comprising molecular oxygen for up to about 60 minutes, preferably for no more than about 10 minutes, e.g. about 5 minutes.

The process can be used to improve the barrier properties of any plastics material. However, the process has particular application in reducing the permeability of polyolefins, particularly polyethylene, and derivatives thereof. In particular, the process is used to improve the barrier properties of high density polyethylene ("HDPE").

One advantage of preferred embodiments of the present process is that the surface-fluorination step can be achieved using any of the known surface-fluorination techniques including fluorination using either fluorine gas alone or diluted in an inert carrier fluid or using a cold plasma of fluorine ions and radicals diluted in an inert carrier fluid. The inert carrier fluid may be any suitable fluid and is usually a gas such as nitrogen, argon or helium gas.

Fluorination may be carried out using virtually oxygen-free fluorine at a partial pressure of no more than about 4 kPa in an inert carrier gas at about 1 atm. (about 0.1 MPa) The fluorination step may be carried out at about room temperature and for about 1.5 to about 2.5 hours.

In preferred embodiments, the surface-fluorinated plastics material or the surface-fluorinated plastics material derived therefrom is exposed to the gaseous fluid after no more than 60 minutes following termination of surface-fluorination. Preferably, no more than 30 minutes elapse after termination of the surface-fluorination step before exposure to the gaseous fluid and, more preferably, this period is less than about 10 minutes.

The plastics material may be in any suitable form. For example, if it is in the form of a membrane, then the process may comprises:

surface-fluorinating at least one side of the membrane to produce a plastics membrane having at least one fluorinated surface, at least one the surface of which is formed polymer-bonded, carbon-centred radicals;
oxidising said carbon-centred radicals to produce polymer-bonded oxide radicals; and then
exposing the or at least one fluorinated surface of the plastics membrane to a gaseous fluid comprising at least one antioxidant to produce a plastics membrane comprising a fluorinated barrier layer.

Where the plastics material is in the form of a container, the process may comprise:

surface-fluorinating at least the interior surface of the container to produce a container comprising a fluorinated interior surface, at least on the surface of which is formed polymer-bonded, carbon-centred radicals;
oxidizing said carbon-centred radicals to produce polymer bonded oxide radicals; and then
exposing at least the fluorinated interior surface of the container to a gaseous fluid comprising at least one antioxidant to produce a plastics container comprising an interior fluorinated barrier layer.

A preferred embodiment of the first aspect of the present invention is substantially as herein described with reference to the accompanying examples.

Use of at least one stabilizer reduces the permeability of a surface-fluorinated plastics material to organic solvent the wettability of a surface fluorinated plastics material to organic solvent. The organic solvent may be a mixture of at least one hydrophilic component and at least one hydrophobic component. For example, the organic solvent may be hydrocarbon vehicle fuel containing at least one oxygenated component selected from ethers or alcohols such as methanol.

According to a second aspect of the present invention, there is provided use of at least one antioxidant to reduce the oxidative degradation of a surface-fluorinated plastics material in a process according to the first aspect of the invention.

The antioxidant is preferably as defined above.

The following is a description, with reference to the drawings, of examples of presently preferred embodiments within the scope of the present invention. In the drawings:

FIGURE 1 is a schematic representation of a weight loss cell used for permeation testing;
FIGURE 2 is an exploded view of the cell in Figure 1;
FIGURE 3 is a graph depicting absolute weight loss against time at 17.5°C and 23.3°C for fluorinated HDPE material not treated according to the present invention; and
FIGURE 4 is a graph depicting the data of Figure 3 normalized as described below;
FIGURE 5 is a graph depicting the normalized specific weight loss against time in Comparative Example 1;
FIGURE 6 is a graph depicting the normalized specific weight loss against time in Example 1;
FIGURE 7 is a graph depicting the normalized specific weight loss against time in Comparative Example 2; and
FIGURE 8 is a graph depicting the normalized specific weight loss against time in Example 2.

The following experimental tests were performed with polyethylene films of an average 350 $\mu$m thickness. The films were prepared from technical high-density polyethylene (blow moulding grade; densities between 0.945 and 0.950 g/cm$^3$) in a press-fusion process.

After the preparation of the sample films, the films were submitted to treatment with elemental fluorine. The treatment conditions were chosen in such a way that the treatment time and fluorine concentration were those used in typical industrial fluorination processes.

The test samples were fluorinated in a stainless steel vacuum reactor at 20 to 24°C and 36 kPa fluorine partial pressure with no carrier gas. In order to allow for a very low oxygen contaminant level during the fluorine treatment, the fluorine employed in the treatment was purified of oxygen according to the procedure developed by Shamir and Binenboym (Inorg. Chim. Acta 2, 37 (1968)).

All substances used for the post-treatment of the fluorinated polymer samples were carefully degassed and/or purified by distillation and/or solid bed absorption as appropriate.

The permeation tests were carried out with the CEC reference fuel RF-02-99 oxy 0.8-1.2 (Calif. Phase II) supplied by Dow Haltermann Products GmbH (Germany). The base fuel was supplemented by 5 vol. % methanol and stored over molecular sieves (pore diameter 0.3 nm) until needed.

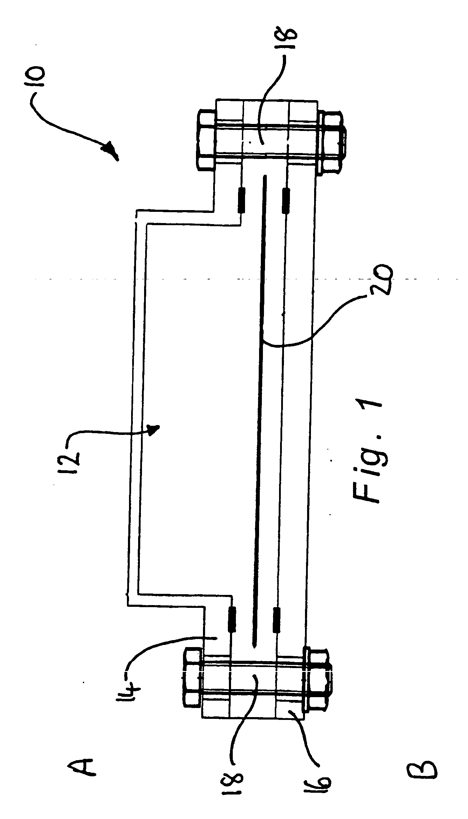

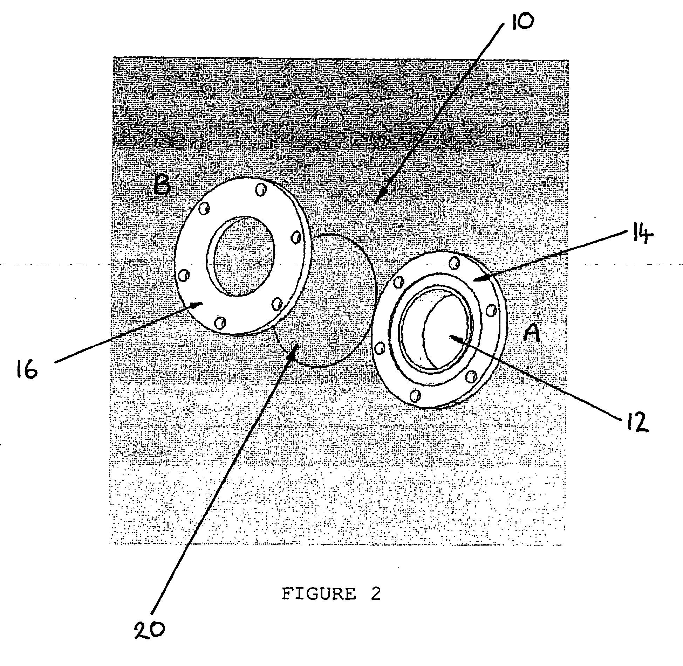

For the permeation tests, purpose-built weight loss cells as depicted in Figures 1 and 2 were used. In the Figures, the weight loss cell 10 has a solvent reservoir 12 incorporating a ring flange 14. A separate ring flange 16 secured to the ring flange 14 of the solvent reservoir 12 by bolts 18. A polymer film 20 is provided between ring flanges 14 and 16.

In the test program, weight loss cells for polymer films with 60 and 40 mm diameter were used.

The weight loss measurements were carried out according to the following procedure (see Figures 1 and 2) :

(a) The weight loss cell 10 was positioned with the bottom of the solvent reservoir 12 (Side A) on an appropriate support pad;
(b) The solvent reservoir 12 was filled with the test solvent;
(c) The polymer film 20 was placed on the flat staunching ring in the seal groove of the cell flange 14;
(d) The loose ring flange 16 was arranged above the screw holes and carefully squeezed against the cell body by tightening of the bolts;
(e) The weight of the permeation cell 10 was determined with an accuracy of 5 mg;
(f) The weight loss cell 10 was turned up side down - with the open ring flange 16 to the bottom (Side B) - and placed on an appropriate horizontal support to ensure complete wetting of the polymer film 20; and
(g) The cell weight was determined at regular time intervals for a time period of typically 25 to 30 days.

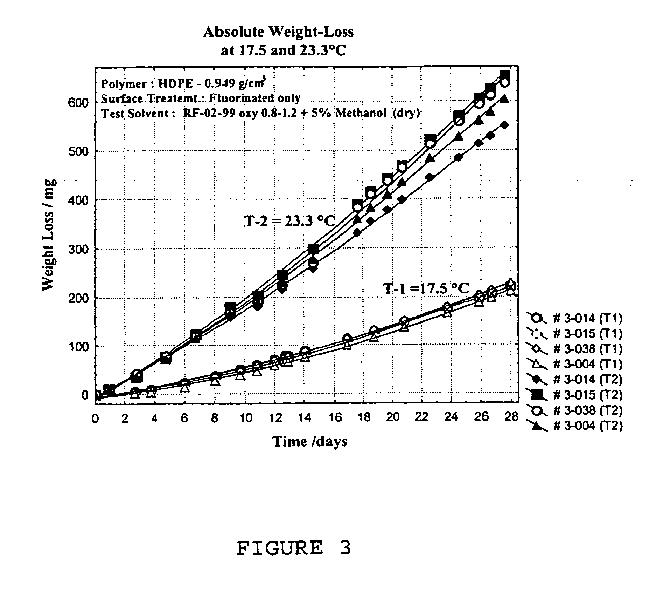

Figure 3 depicts absolute weight loss data from experiments carried out in accordance with the above-mentioned procedure at 17.5°C and 23.3°C on HDPE (0.949 c/cm$^3$) that was fluorinated only.

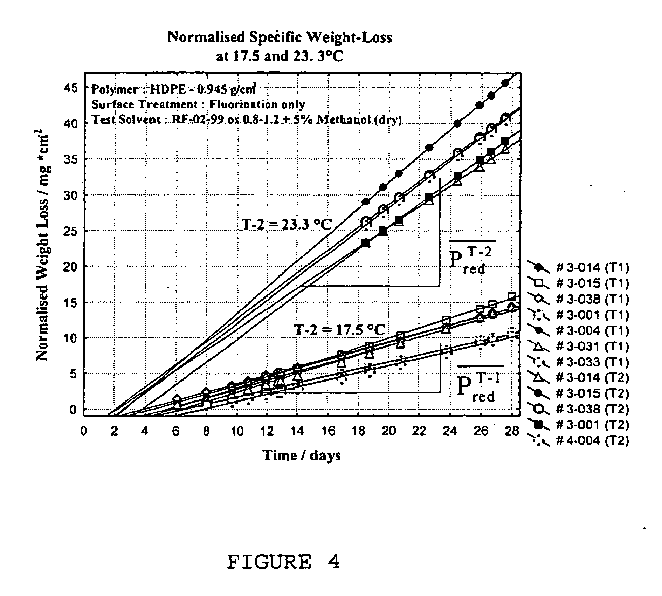

The experimental weight loss data $\Delta m_{exp}$ are normalized according to Formula I (normalized to a standard sample thickness of 350 $\mu$m and 125 minutes treatment time). During the data reduction process, the linear dependency of the growth of the fluorinated layer on the square root of the fluorination time and the reciprocal dependence of weight loss on the thickness of the sample fluorinated under standard conditions was taken into account. The normalized weight loss data expressed in units of weight per unit area of wetted sample surface $F_{wetted}$ was plotted as a function of time (see Figure 4) and this provided the desired weight loss rate ($P_{red}$) - the slope $P_{red}(T)$ of the linear part of the weight loss curve - in units of weight per unit area and time at a given temperature.

$$\Delta m_{red.}^{T}(T) = \frac{1}{F_{wetted}}(\Delta m_{exp.}^{T} \cdot \frac{d_{sample}[\mu m]}{350 \mu m} \cdot \sqrt{\frac{t_{treatm.}[\min]}{125 \min}})$$

$$\text{Formula I}$$

Figure 4 depicts normalized, specific weight loss for a number of selected permeation experiments performed at 17.5°C and 23.3°C on samples of HDPE (0.945 g/cm$^3$). Samples from the same polymers (e.g. #3-014) were used at the two different temperatures. It is important to note that experimental data were normalized with regard to fluorination time (same thickness of the fluorinated surface layer. Formula I assumes that the temperature and the fluorine partial pressure during the fluorination are always the same. This condition was satisfied in the Inventors experiments. If that is not the case, a more complex formula is required to normalize the raw experimental data) and the total thickness of the fluorinated sample only.

The weight loss measurements as illustrated in Figure 3 which were carried out at different temperatures were also normalized using Formula II to a standard permeation temperature of 20°C to calculate the reduced average permeation rate $P_{red}$ at 20°C.

$$\frac{d \ln \overline{P_{red}^{T}}}{d T} = \frac{E_{act.}^{(P)}}{R \cdot T^2}$$

$$\text{Formula II}$$

T       Temperature;

$P^T$      Average reduced specific permeation rate at temperature T [weight*surface area$^{-1}$*time$^{-1}$]; and

$E^{(p)}_{act}$      Activation energy of the permeation process

COMPARATIVE EXAMPLE 1

Three polyethylene films ($\rho_{polymer}$=0.949 g/cm$^3$, diameter (d) = 6 cm (wetted diameter = 4.4 cm); film thickness = 362 $\pm$ 2.1 $\mu$m) were surface fluorinated with virtually oxygen-free fluorine at a temperature of 21 $\pm$ 1°C and 3.6 kPa fluorine partial pressure for 110, 110 and 125 minutes respectively.

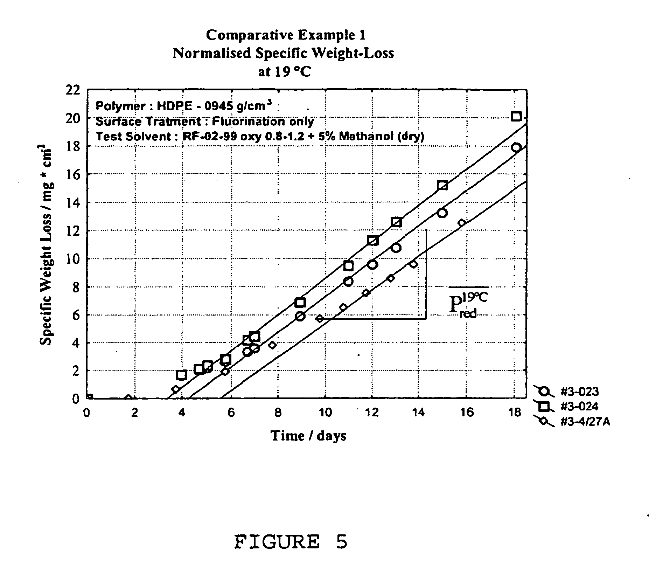

The subsequent weight loss tests were carried out at room temperature with RF-02-99 oxy 0.8-1.2 (Calif. Phase II) reference fuel containing 5 vol. % methanol and the normalized specific weight loss against time is depicted in Figure 5. These tests resulted in a normalized (treatment time = 125 min, film thickness = 350 $\mu$m) permeation rate ($P_{red}$) at 20°C of 1.53 $\pm$ 0.10 mg/(d*cm$^2$).

EXAMPLE 1

Eleven polyethylene films ($\rho_{polymer}$ = from 0.945 to 0.949 g/cm$^3$, diameter = 6 cm (wetted diameter = 4.4cm); film thickness between 327 to 374 $\mu$m) were surface fluorinated with virtually oxygen-free fluorine between 20 and 23°C and 3.6 kPa fluorine partial pressure with fluorination treatment times between 120 and 125 minutes.

After completion of fluorination, the samples were then exposed to air for 5 minutes and then treated at room temperature with undiluted gaseous triethylamine ("TEA") at a partial pressure of 6 kPa for 40 minutes.

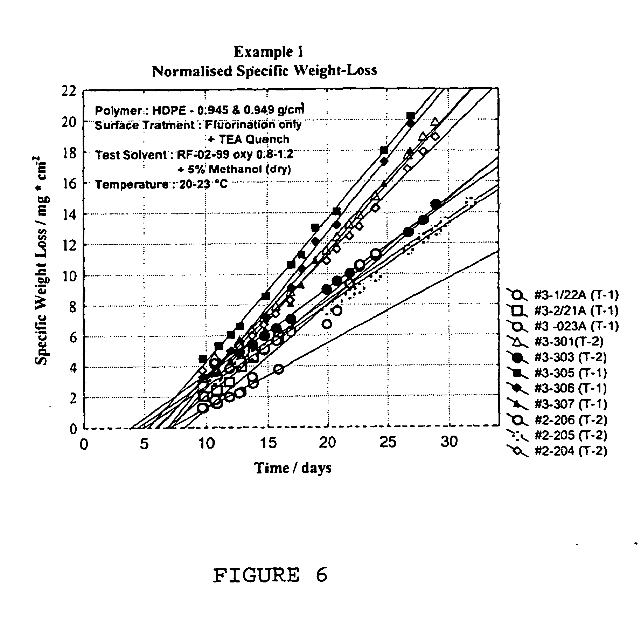

The subsequent weight loss tests were carried out at temperatures between 18 and 20°C with dry RF-02-99 oxy 0.8-1.2 (Calif. Phase II) reference fuel containing 5 vol. % methanol and the normalized specific weight loss against time is depicted in Figure 6. These tests resulted in a normalized (treatment time = 125 min, film thickness = 350 $\mu$m) permeation rate ($P_{red}$) at 20°C of 0.82 $\pm$ 0.16 mg/(d*cm$^2$). Such a permeation rate is less than the rate observed in Comparative Example 1 by a factor of about 1.8.

COMPARATIVE EXAMPLE 2

Twelve polyethylene films ($\rho_{polymer}$=0.949 g/cm$^3$, diameter = 4.4 cm; film thickness between 337 and 374 $\mu$m) were surface fluorinated with virtually oxygen-free fluorine at temperatures between 23.6 and 24°C and 3.6 kPa fluorine partial pressure for 125, 128 and 132 minutes.

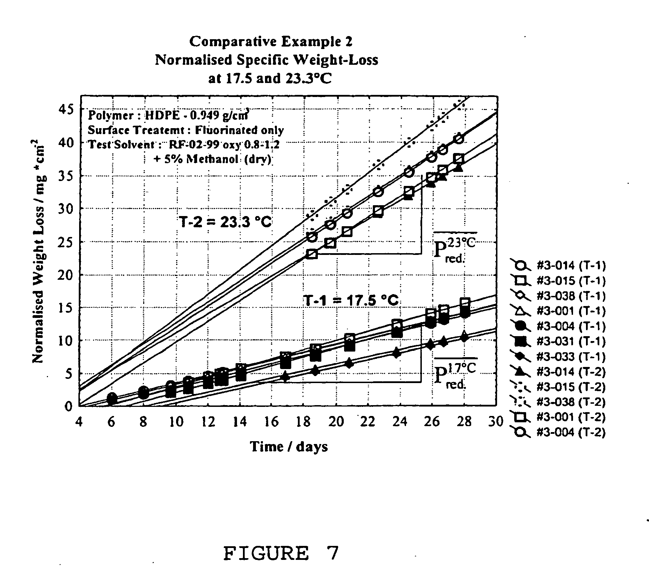

The subsequent weight loss tests were carried out at temperatures between 17.5 and 23.2°C with RF-02-99 oxy 0.8-1.2 (Calif. Phase II) reference fuel containing 5 vol. % methanol and the normalized specific weight loss against time is depicted in Figure 7. These tests resulted in a normalized (treatment time = 125 min, film thickness = 350 $\mu$m) permeation rate ($P_{red}$) at 20°C of 0.93 $\pm$ 0.11 mg/(d*cm$^2$).

EXAMPLE 2

Nine polyethylene films ($\rho_{polymer}$ 0.949 g/cm$^3$, diameter = 4.4 cm; film thickness between 347 and 374 $\mu$m) were surface fluorinated with virtually oxygen-free fluorine at 23°C and 3.6 kPa fluorine partial pressure with a fluorination treatment time of 126 minutes.

After completion of fluorination, the samples were then exposed to air for 5 minutes and then treated at room temperature with gaseous TEA at a partial pressure of 6.0 kPa for 40 minutes.

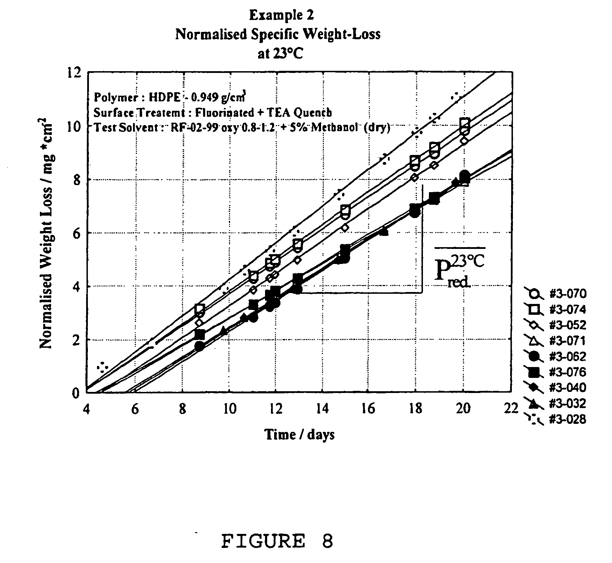

The subsequent weight loss tests were carried out at a temperature of 23°C with dry RF-02-99 oxy 0.8-1.2 (Calif. Phase II) reference fuel containing 5 vol. % methanol and the normalized specific weight loss against time is depicted in Figure 8. These tests resulted in a normalized (treatment time = 125 min, film thickness = 350 $\mu$m) permeation rate ($P_{red}$) at 20°C of 0.354 $\pm$ 0.038 mg/(d*cm$^2$). Such a permeation rate is less than the rate observed in Comparative Example 2 by a factor of about 2.6.

Advantages of preferred embodiments of the present invention include:

- Reduced permeability (e.g. improved barrier performance) of plastics materials to organic solvent, especially hydrocarbon vehicle fuel comprising oxygenated components such as methanol;
- Reduced wettability of surface fluorinated plastics membranes to organic solvent, particularly to hydrophobic organic liquids having hydrophilic components;
- Reduced extent to which fluorinated barrier layer deteriorates due to oxidative degeneration;
- Elimination of a need to monitor and carefully control oxygen contaminant levels - resulting in increased efficiency and a reduction of capital and operating costs;

- Processes of the present invention can be integrated with existing industrial in-line or off-line surface fluorination processes without substantial modification of existing equipment or protocols; and
- Processes of the present invention avoid the need to use more than one quench gas.

It will be appreciated that the invention is not restricted to the details described above with reference to the preferred embodiments but that numerous modifications can be made without departing from the scope of the invention as defined in the following claims.

**Claims**

1. A process for reducing the permeability of a plastics material to organic solvent comprising:

   surface-fluorinating at least a portion of the surface of a plastics material to produce a surface-fluorinated plastics material, at least on the surface of which are formed polymer-bonded, carbon-centred radicals;
   oxidising said carbon-centred radicals to produce polymer bonded oxide radicals; and then
   exposing said surface-fluorinated plastics material to a gaseous fluid comprising at least one antioxidant to produce a plastics material comprising a fluorinated barrier layer.

2. A process as claimed in Claim 1 wherein said carbon centred radicals are oxidized prior to exposure to said gaseous fluid by reaction with molecular oxygen present as an impurity during surface fluorination.

3. A process as claimed in Claim 1 or Claim 2 wherein said carbon centred radicals are oxidized prior to exposure to said gaseous fluid by exposing said surface fluorinated plastics material to a gas comprising molecular oxygen to produce at least partially oxidized surface fluorinated plastics material, said at least partially oxidized surface fluorinated plastics material then being exposed to said gaseous fluid.

4. A process as claimed in Claim 3 wherein the gas comprising molecular oxygen purges the surface fluorinated plastics material of surface fluorination by-products.

5. A process as claimed in Claim 3 or Claim 4 wherein the gas comprising molecular oxygen is air.

6. A process as claimed in any of Claims 3 to 5 wherein the surface fluorinated plastics material is exposed to said gas comprising molecular oxygen for less than about 60 minutes.

7. A process as claimed in any of the preceding claims wherein said surface-fluorinated plastics material or said surface-fluorinated plastics material derived therefrom is exposed to the gaseous fluid after no more than 60 minutes following termination of surface fluorination.

8. A process as claimed in any of the preceding claims wherein the antioxidant is selected from the group consisting of amines having at least one hydrocarbon group having from 1 to 4 carbon atoms; and phosphine and phosphine derivatives.

9. A process as claimed in any of Claims 1 to 7 wherein the antioxidant is an amine having three hydrocarbon groups, each hydrocarbon group having from 1 to 4 carbon atoms.

10. A process as claimed in any of the preceding claims wherein the antioxidant is selected from the group consisting of triethylamine, trimethylamine, dimethylethylamine, diethylmethylamine, methylamine and dimethylamine.

11. A process as claimed in any of the preceding claims wherein the antioxidant is triethylamine.

12. A process as claimed in any of the preceding claims wherein the gaseous fluid comprises at least one antioxidant supported in an inert carrier gas.

13. A process as claimed in Claim 12 wherein the antioxidant has a (total) partial pressure in a carrier gas of no more than 100 kPa.

14. A process as claimed in any of Claims 1 to 11 wherein the gaseous fluid consists essentially of at least one antioxidant.

**15.** A process as claimed in any of the preceding claims wherein the surface-fluorinated plastics material is exposed to said gaseous fluid at a temperature of from 0°C to the softening temperature of the plastics material.

**16.** A process as claimed in any of the preceding claims wherein the surface-fluorinated plastics material is exposed to gaseous said fluid for no more than about 60 minutes.

**17.** A process as claimed in any of the preceding claims wherein said plastics material is in the form of a membrane, said process comprising:

surface-fluorinating at least one side of the membrane to produce a plastics membrane having at least one fluorinated surface, at least on the surface of which is formed polymer-bonded, carbon-centred radicals; oxidizing said carbon-centred radicals to produce polymer bonded oxide radicals; and then exposing the or at least one fluorinated surface of the plastics membrane to a gaseous fluid comprising at least one antioxidant to produce a plastics membrane comprising a fluorinated barrier layer.

**18.** A process as claimed in any of Claims 1 to 16 wherein said plastics material is in the form of a container, said process comprising:

surface-fluorinating at least the interior surface of the container to produce a container having a fluorinated interior surface, at least one the surface of which is formed polymer-bonded, carbon-centred radicals; oxidizing said carbon-centred radicals to produce polymer bonded oxide radicals; and then exposing at least the fluorinated interior surface of the container to a gaseous fluid comprising at least one antioxidant to produce a plastics material comprising an interior fluorinated barrier layer.

**19.** Use of at least one antioxidant to reduce the oxidative degradation of a surface-fluorinated plastics material in a process for reducing the permeability of a plastics material to organic solvent, said process comprising:

surface-fluorinating at least a portion of the surface of a plastics material to produce a surface-fluorinated plastics material, at least on the surface of which are formed polymer-bonded, carbon-centred radicals; oxidising said carbon-centred radicals to produce polymer bonded oxide radicals; and then exposing said surface-fluorinated plastics material to a gaseous fluid comprising at least one antioxidant to produce a plastics material comprising a fluorinated barrier layer.

**Patentansprüche**

**1.** Verfahren zur Verringerung der Permeabilität eines Kunststoffmaterials für organisches Lösungsmittel, umfassend:

das Oberflächenfluorieren von mindestens einem Teil der Oberfläche eines Kunststoffmaterials, um ein oberflächenfluoriertes Kunststoffmaterial herzustellen, wobei mindestens auf der Oberfläche davon polymergebundene kohlenstofforientierte Radikale gebildet werden; das Oxidieren der kohlenstofforientierten Radikale, um polymergebundene Oxidradikale herzustellen; und dann das Einwirken eines gasförmigen, mindestens ein Antioxidationsmittel umfassenden Fluids auf das oberflächenfluorierte Kunststoffmaterial, wobei ein Kunststoffmaterial hergestellt wird, welches eine fluorierte Barriereschicht umfasst.

**2.** Verfahren wie in Anspruch 1 beansprucht, wobei die kohlenstofforientierten Radikale vor der Einwirkung des gasförmigen Fluids durch Umsetzung mit molekularem Sauerstoff oxidiert werden, der als eine Verunreinigung während der Oberflächenfluorierung vorhanden ist.

**3.** Verfahren wie in Anspruch 1 oder Anspruch 2 beansprucht, wobei die kohlenstofforientierten Radikale vor der Einwirkung des gasförmigen Fluids durch Einwirken eines molekularen Sauerstoff umfassenden Gases auf das oberflächenfluorierte Kunststoffmaterial oxidiert werden, wobei mindestens teilweise oxidiertes oberflächenfluoriertes Kunststoffmaterial hergestellt wird, wobei dann das mindestens teilweise oxidierte oberflächenfluorierte Kunststoffmaterial dem gasförmigen Fluid ausgesetzt wird.

**4.** Verfahren wie in Anspruch 3 beansprucht, wobei das molekularen Sauerstoff umfassende Gas das oberflächenfluorierte Kunststoffmaterial von Oberflächenfluorierungsnebenprodukten reinigt.

**5.** Verfahren wie in Anspruch 3 oder Anspruch 4 beansprucht, wobei das molekularen Sauerstoff umfassende Gas Luft ist.

**6.** Verfahren wie in einem der Ansprüche 3 bis 5 beansprucht, wobei das oberflächenfluorierte Kunststoffmaterial dem molekularen Sauerstoff umfassenden Gas für weniger als etwa 60 Minuten ausgesetzt wird.

**7.** Verfahren wie in einem der vorhergehenden Ansprüche beansprucht, wobei das oberflächenfluorierte Kunststoffmaterial oder das davon abgeleitete oberflächenfluorierte Kunststoffmaterial dem gasförmigen Fluid nach nicht mehr als 60 Minuten nach dem Abbruch der Oberflächenfluorierung ausgesetzt wird.

**8.** Verfahren wie in einem der vorhergehenden Ansprüche beansprucht, wobei das Antioxidationsmittel aus der Gruppe ausgewählt ist, welche aus Aminen mit mindestens einem Kohlenwasserstoffrest mit 1 bis 4 Kohlenstoffatomen; und Phosphin und Phosphinderivaten besteht.

**9.** Verfahren wie in einem der Ansprüche 1 bis 7 beansprucht, wobei das Antioxidationsmittel ein Amin mit drei Kohlenwasserstoffresten ist, wobei jeder Kohlenwasserstoffrest 1 bis 4 Kohlenstoffatome aufweist.

**10.** Verfahren wie in einem der vorhergehenden Ansprüche beansprucht, wobei das Antioxidationsmittel aus der Gruppe ausgewählt ist, welche aus Triethylamin, Trimethylamin, Dimethylethylamin, Diethylmethylamin, Methylamin und Dimethylamin besteht.

**11.** Verfahren wie in einem der vorhergehenden Ansprüche beansprucht, wobei das Antioxidationsmittel Triethylamin ist.

**12.** Verfahren wie in einem der vorhergehenden Ansprüche beansprucht, wobei das gasförmige Fluid mindestens ein in einem inerten Trägergas getragenes Antioxidationsmittel umfasst.

**13.** Verfahren wie in Anspruch 12 beansprucht, wobei das Antioxidationsmittel einen (Gesamt)partialdruck in einem Trägergas von nicht höher als 100 kPa aufweist.

**14.** Verfahren wie in einem der Ansprüche 1 bis 11 beansprucht, wobei das gasförmige Fluid im Wesentlichen aus mindestens einem Antioxidationsmittel besteht.

**15.** Verfahren wie in einem der vorhergehenden Ansprüche beansprucht, wobei das oberflächenfluorierte Kunststoffmaterial dem gasförmigen Fluid bei einer Temperatur von 0°C bis zur Erweichungstemperatur des Kunststoffmaterials ausgesetzt wird.

**16.** Verfahren wie in einem der vorhergehenden Ansprüche beansprucht, wobei das oberflächenfluorierte Kunststoffmaterial dem gasförmigen Fluid für nicht länger als etwa 60 Minuten ausgesetzt wird.

**17.** Verfahren wie in einem der vorhergehenden Ansprüche beansprucht, wobei das Kunststoffmaterial in der Form einer Membran ist, wobei das Verfahren umfasst:

das Oberflächenfluorieren von mindestens einer Seite der Membran, um eine Kunststoffmembran mit mindestens einer fluorierten Oberfläche herzustellen, wobei mindestens auf der Oberfläche davon polymergebundene kohlenstofforientierte Radikale gebildet werden;
das Oxidieren der kohlenstofforientierten Radikale, um polymergebundene Oxidradikale herzustellen; und dann das Einwirken eines gasförmigen, mindestens ein Antioxidationsmittel umfassenden Fluids auf die oder auf mindestens eine fluorierte Oberfläche der Kunststoffmembran, hergestellt wird, wobei eine Kunststoffmembran hergestellt wird, welche eine fluorierte Barriereschicht umfasst.

**18.** Verfahren wie in einem der Ansprüche 1 bis 16 beansprucht, wobei das Kunststoffmaterial in der Form eines Behälters ist, wobei das Verfahren umfasst:

das Oberflächenfluorieren von mindestens der Innenoberfläche des Behälters, um einen Behälter mit einer fluorierten Innenoberfläche herzustellen, wobei mindestens auf der Oberfläche davon polymergebundene kohlenstofforientierte Radikale gebildet werden;
das Oxidieren der kohlenstofforientierten Radikale, um polymergebundene Oxidradikale herzustellen; und dann das Einwirken eines gasförmigen, mindestens ein Antioxidationsmittel umfassenden Fluids auf mindestens die fluorierte Innenoberfläche des Behälters, wobei ein Kunststoffmaterial hergestellt wird, welches eine fluorierte Barriereinnenschicht umfasst.

19. Verwendung von mindestens einem Antioxidationsmittel zur Verringerung des oxidativen Abbaus eines oberflächenfluorierten Kunststoffmaterial in einem Verfahren zur Verringerung der Durchlässigkeit eines Kunststoffmaterials für organisches Lösungsmittel, wobei das Verfahren umfasst:

das Oberflächenfluorieren von mindestens einem Teil der Oberfläche eines Kunststoffmaterial, um ein oberflächenfluoriertes Kunststoffmaterial herzustellen, wobei mindestens auf der Oberfläche davon polymergebundene kohlenstofforientierte Radikale gebildet werden;
das Oxidieren der kohlenstofforientierten Radikale, um polymergebundene Oxidradikale herzustellen; und dann
das Einwirken eines gasförmigen, mindestens ein Antioxidationsmittel umfassenden Fluids auf das oberflächenfluorierte Kunststoffmaterial, wobei ein Kunststoffmaterial hergestellt wird, welches eine fluorierte Barriereschicht umfasst.

## Revendications

1. Processus pour réduire la perméabilité d'une matière plastique à un solvant organique comprenant :

réaliser une fluoration de surface d'au moins une partie de la surface d'une matière plastique pour produire une matière plastique à surface fluorée, au moins sur la surface de laquelle sont formés des radicaux centrés sur le carbone, liés à des polymères;
oxyder lesdits radicaux centrés sur le carbone pour produire des radicaux d'oxyde liés à des polymères; et ensuite
exposer ladite matière plastique à surface fluorée à un fluide gazeux comprenant au moins un antioxydant pour produire une matière plastique comprenant une couche barrière fluorée.

2. Processus comme revendiqué dans la revendication 1 dans lequel lesdits radicaux centrés sur le carbone sont oxydés avant l'exposition audit fluide gazeux par réaction avec de l'oxygène moléculaire présent comme impureté pendant la fluoration de surface.

3. Processus comme revendiqué dans la revendication 1 ou la revendication 2 dans lequel lesdits radicaux centrés sur le carbone sont oxydés avant l'exposition audit fluide gazeux en exposant ladite matière plastique à surface fluorée à un gaz comprenant de l'oxygène moléculaire pour produire une matière plastique à surface fluorée au moins partiellement oxydée, ladite matière plastique à surface fluorée au moins partiellement oxydée étant ensuite exposée audit fluide gazeux.

4. Processus comme revendiqué dans la revendication 3 dans lequel le gaz comprenant de l'oxygène moléculaire purge la matière plastique à surface fluorée de sous-produits de fluoration de surface.

5. Processus comme revendiqué dans la revendication 3 ou la revendication 4 dans lequel le gaz comprenant de l'oxygène moléculaire est l'air.

6. Processus comme revendiqué dans l'une quelconque des revendications 3 à 5 dans lequel la matière plastique à surface fluorée est exposée audit gaz comprenant de l'oxygène moléculaire pendant moins qu'environ 60 minutes.

7. Processus comme revendiqué dans l'une quelconque des revendications précédentes dans lequel ladite matière plastique à surface fluorée ou ladite matière plastique à surface fluorée dérivée de celle-ci est exposée au fluide gazeux au plus 60 minutes après la fin de la fluoration de surface.

8. Processus comme revendiqué dans l'une quelconque des revendications précédentes dans lequel l'antioxydant est sélectionné parmi le groupe consistant en des amines ayant au moins un groupe d'hydrocarbure ayant de 1 à 4 atomes de carbone ; et de la phosphine et des dérivés de phosphine.

9. Processus comme revendiqué dans l'une quelconque des revendications 1 à 7 dans lequel l'antioxydant est une amine ayant trois groupes d'hydrocarbures, chaque groupe d'hydrocarbure ayant de 1 à 4 atomes de carbone.

10. Processus comme revendiqué dans l'une quelconque des revendications précédentes dans lequel l'antioxydant est sélectionné parmi le groupe consistant en triéthylamine, triméthylamine, diméthyléthylamine, diéthylméthylamine, méthylamine, diméthylamine.

11. Processus comme revendiqué dans l'une quelconque des revendications précédentes dans lequel l'antioxydant est de la triéthylamine.

12. Processus comme revendiqué dans l'une quelconque des revendications précédentes dans lequel le fluide gazeux comprend au moins un antioxydant soutenu dans un gaz porteur inerte.

13. Processus comme revendiqué dans la revendication 12 dans lequel l'antioxydant a une pression partielle (totale) dans un gaz porteur non supérieure à 100 kPa.

14. Processus comme revendiqué dans l'une quelconque des revendications 1 à 11 dans lequel le fluide gazeux consiste essentiellement en au moins un antioxydant.

15. Processus comme revendiqué dans l'une quelconque des revendications précédentes dans lequel la matière plastique à surface fluorée est exposée audit fluide gazeux à une température de 0°C jusqu'à la température de ramollissement de la matière plastique.

16. Processus comme revendiqué dans l'une quelconque des revendications précédentes dans lequel la matière plastique à surface fluorée est exposée audit fluide gazeux pendant pas plus qu'environ 60 minutes.

17. Processus comme revendiqué dans l'une quelconque des revendications précédentes dans lequel ladite matière plastique est sous la forme d'une membrane, ledit processus comprenant :

réaliser une fluoration de surface d'au moins un côté de la surface de la membrane pour produire une membrane en plastique ayant au moins une surface fluorée, au moins sur la surface de laquelle sont formés des radicaux centrés sur le carbone, liés à des polymères;
oxyder lesdits radicaux centrés sur le carbone pour produire des radicaux d'oxyde liés à des polymères; et ensuite exposer la ou au moins une surface fluorée de la membrane en plastique à un fluide gazeux comprenant au moins un antioxydant pour produire une membrane en plastique comprenant une couche barrière fluorée.

18. Processus comme revendiqué dans l'une quelconque des revendications 1 à 16 dans lequel ladite matière plastique est sous la forme d'un récipient, ledit processus comprenant :

réaliser une fluoration de surface d'au moins la surface intérieure du récipient pour produire un récipient ayant une surface intérieure fluorée, au moins sur la surface duquel sont formés des radicaux centrés sur le carbone, liés à des polymères ;
oxyder lesdits radicaux centrés sur le carbone pour produire des radicaux d'oxyde liés à des polymères; et ensuite exposer au moins la surface intérieure fluorée du récipient à un fluide gazeux comprenant au moins un antioxydant pour produire une matière plastique comprenant une couche barrière fluorée à l'intérieur.

19. Utilisation d'au moins un antioxydant pour réduire la dégradation oxydative d'une matière plastique à surface fluorée dans un processus pour réduire la perméabilité d'une matière plastique à un solvant organique, ledit processus comprenant :

réaliser une fluoration de surface d'au moins une partie de la surface d'une matière plastique pour produire une matière plastique à surface fluorée, au moins sur la surface de laquelle sont formés des radicaux centrés sur le carbone, liés à des polymères;
oxyder lesdits radicaux centrés sur le carbone pour produire des radicaux d'oxyde liés à des polymères; et ensuite exposer ladite matière plastique à surface fluorée à un fluide gazeux comprenant au moins un antioxydant pour produire une matière plastique comprenant une couche barrière fluorée.

*Fig. 1*

FIGURE 2

**Absolute Weight-Loss
at 17.5 and 23.3°C**

FIGURE 3

**Normalised Specific Weight-Loss
at 17.5 and 23. 3°C**

FIGURE 4

FIGURE 5

Example 1
Normalised Specific Weight-Loss

FIGURE 6

FIGURE 7

Example 2
Normalised Specific Weight-Loss
at 23°C

FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2129289 A
- US 2811468 A
- US 4491653 A
- US 5401451 A
- US 3862284 A
- US 4764405 A

- US 3758450 A
- US 4020223 A
- EP 0816418 A
- US 6045766 A
- US 6045776 A

**Non-patent literature cited in the description**

- **HAYES.** *J. Fluorine Chem.,* 1976, vol. 8 (1), 69
- **DU TOIT et al.** *J. Fluorine Chemistry,* 1995, vol. 74, 43
- **HOBBS et al.** *J. Fluorine Chemistry,* 2000, vol. 104, 87
- **GUGUMUS.** *Polym. Deg. Stab.,* 1999, vol. 66, 161

- **ADCOCK et al.** *J. Am. Chem. Soc,* 1978, vol. 100, 1948
- **LAGOW et al.** *Progr. Inorg. Chem,* 1979, vol. 26, 161
- **BOHLAND et al.** *Trans. Faraday Soc.,* 1946, vol. 42, 244